# EUROPEAN PATENT APPLICATION

(11) **EP 4 711 903 A1**
(43) Date of publication of application: **18.03.2026**
(21) Application number: 24803065.2
(22) Date of filing: 09.05.2024
(51) Int. Cl.: G06F 3/0481

(54) **INTERACTION METHOD AND APPARATUS, AND ELECTRONIC DEVICE AND STORAGE MEDIUM**

(30) Priority: 09.05.2023 CN 202310520531
(71) Applicant: BEIJING YOUZHUJU NETWORK TECHNOLOGY CO. LTD., Beijing 101299 (CN)
(72) Inventor: LIN, Peng, Beijing 100028 (CN); WANG, Jinchao, Beijing 100028 (CN)
(74) Representative: Isarpatent
(86) International application number: PCT/CN2024/092033
(87) International publication number: WO 2024/230786

(57) **Abstract**

The present disclosure relates to an interaction method, apparatus, electronic device and storage medium, the method comprising: presenting a target page; presenting operation guidance information in the target page, if processing record information of a target object by a user satisfies a preset triggering condition, the operation guidance information being operation method prompt information for prompting the completion of a target process; the target process being a page presentation process from the target page to a target object associated page corresponding to the processing record information; the target object associated page being used for presenting information associated with the target object. It can associate a teaching process of guiding the user to use the application with its historical behavior, improving the user experience.

## Description

### CROSS REFERENCE TO RELATED APPLICATION(S)

This application claims priority of the Chinese invention patent application No. 202310520531.2 submitted on May 09, 2023, and entitled "INTERACTION METHOD, APPARATUS, ELECTRONIC DEVICE AND STORAGE MEDIUM", which is hereby incorporated by reference in its entirety.

### FIELD

The present disclosure relates to the field of human-computer interaction, and more particularly to an interaction method, apparatus, electronic device and storage medium.

### BACKGROUND

With continuous development of technologies related to e-commerce application (Application, APP), demands for functions related to e-commerce application by people are becoming more and more diverse, especially information presentation ways and presentation contents closely related to use experiences of the people.

Therefore, how to meet interaction functional requirements of diverse e-commerce applications of the user and thereby improve use experiences of the user is a problem that needs to be solved urgently.

### SUMMARY

In order to solve the above technical problems or at least partially solve the above technical problems, the present disclosure provides an interaction method, apparatus, electronic device and storage medium.

In a first aspect, the present disclosure provides an interaction method, comprising:
presenting a target page;
presenting operation guidance information in the target page, if processing record information of a target object by a user satisfies a preset triggering condition, the operation guidance information being operation method prompt information for prompting the completion of a target process; the target process being a page presentation process from the target page to a target object associated page corresponding to the processing record information; the target object associated page being used for presenting information associated with the target object.

In a second aspect, the present disclosure also provides an interaction apparatus, comprising:
a target page presentation module for presenting a target page;
an operation guidance information presentation module for presenting operation guidance information in the target page, if processing record information of a target object by a user satisfies a preset triggering condition, the operation guidance information being operation method prompt information for prompting the completion of a target process; the target process being a page presentation process from the target page to a target object associated page corresponding to the processing record information; the target object associated page being used for presenting information associated with the target object.

In a third aspect, the present disclosure also provides an electronic device, the electronic device comprising:
one or more processors;
a storage apparatus for storing one or more programs;
the one or more programs, when executed by the one or more processors, cause the one or more processors to carry out the method as described above.

In a fourth aspect, the present disclosure also provides a computer-readable storage medium having a computer program stored thereon, wherein the program, when executed by a processor, carries out the method as described above.

### BRIEF DESCRIPTION OF THE DRAWINGS

The accompanying drawings herein, which are incorporated into and constitute a part of the specification, illustrate the embodiments consistent with the present disclosure, and are used in connection with the specification to explain the principles of the present disclosure.

In order to more clearly illustrate the technical solutions in the embodiments of the present disclosure or in the prior art, the accompanying drawings required in the description of the embodiments or the prior art will be briefly introduced below. It is apparent to those of ordinary skill in the art that other drawings can be obtained from these accompanying drawings without any creative effort.
Figure 1 is a flowchart of an interaction method according to an embodiment of the present disclosure;
Figures 2 and 3 are schematic diagrams of two target pages provided in an embodiment of the present disclosure;
Figure 4 is a schematic diagram of another target page provided in an embodiment of the present disclosure;
Figures 5-6 are schematic diagrams of a client display interface of an application in a process of carting a target object provided by the present disclosure;
Figures 7-9 are schematic diagrams of a display interface of an application in an order placement processing scenario provided by an embodiment of the present disclosure
Figure 10 is a schematic structural diagram of an interaction apparatus in an embodiment of the present disclosure;
Figure 11 is a schematic structural diagram of an electronic device in an embodiment of the present disclosure.

### DETAILED DESCRIPTION

In order to understand the above objectives, features, and advantages of the present disclosure more clearly, the following will further describe the solution of the present disclosure. It should be noted that, the embodiments of the present disclosure and the features in the embodiments may be combined with each other without any conflict.

Many specific details are set forth in the following description to facilitate a full understanding of the present disclosure, but the present disclosure can also be implemented in other ways different from those described herein; obviously, the embodiments in the description are only a part of the embodiments of the present disclosure, rather than all of them.

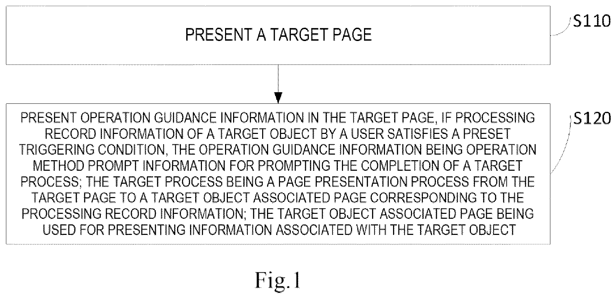

Figure 1 is a flowchart of an interaction method according to an embodiment of the present disclosure. The present embodiment may be applied to a case where a user interacts with a client of an application, the method may be performed by an interaction apparatus, the apparatus may be implemented using software and/or hardware. The apparatus may be configured in an electronic device, such as a terminal, specifically including but not limited to a smart phone, a Personal Digital Assistant, a tablet computer, a wearable device with a display screen, a desktop computer, a notebook computer, an All-in-One computer, a smart home device.

The interaction method provided herein, before and/or upon executing S110 in Figure 1, needs to acquire processing record information of a target object by a user.

In various embodiments of the present disclosure, the collection and use of object processing information are authorized by the user and comply with relevant regulations. In addition, in the collection and use of object processing information, personal information of the user will not be collected or processed in a way that does not reveal the identity of the user.

An object, for example, can be a thing presented to the user. In some embodiments, in an e-commerce scenario, the object, for example, can be a commodity. Specifically, the object can include purchasable items or services, etc. The object includes multiple attributes. The attributes of the object can be a feature possessed by its own structure, composition, etc. If the object is an item, the attribute of the object includes name, brand, category, style, size, material, function, trademark, type, price, color, and packaging of the object. If the object is a service, its attribute is content, brand, category, precautions, and price included in the object.

The target object, for example, can be an object that has been processed by the user. If the object is a commodity, processing of the target object by the user can include at least one of the following: favoriting processing of the target object, carting processing of the target object, order placement processing of the target object, and submitting order and pending payment processing. Here, the submitting order and pending payment processing refers to the user selecting specification attributes (such as color, type, style, etc.) and purchase quantity of the commodity they wish to purchase, submitting an order, but not paying for the submitted order. The order placement processing refers to the user selecting the specification attributes (such as color, type, style, etc.) and purchase quantity of the commodity they wish to purchase, submitting an order, and paying for the submitted order.

For example, the processing record information can be information used for describing the situation where the user processes the target object. Exemplarily, the processing record information includes at least one of the following: identification information of the target object, processing way information of the target object by the user, and processing time information of the target object by the user. The identification information of the target object can be information that distinguishes the target object from other objects. Exemplarily, the identification information of the target object includes the name or number of the target object, etc.

As shown in Figure 1, the method may specifically include:
S110, presenting a target page.

The target page can be any page in the application except for a target object associated page.

Here, the target object associated page is a page that can reflect a processing result of the target object. Optionally, the target object associated page includes attribute information and/or state information of the target object.

The attribute information of the target object is information that describes the attributes of the target object. The state information of the target object is information that describes a current state of the target object. The state information of the target object is related to a processing way of the target object by the user. In some scenarios, a state of the target object will change after the user processes it. Exemplarily, if the favoriting process is performed on the target object, the state of the target object will change from a non-favoriting state to a favoriting state. If the carting processing is performed on the target object, the state of the target object will change from an uncarting state to a carting state. If the order placement processing is performed on the target object, the state of the target object will change from a non-ordered state to a waiting-for-receiving state. If the submitting order and pending payment processing is performed on the target object, the state of the target object will change from the non-ordered state to a pending payment state.

The target object associated page corresponds to the processing record information, which means that the target object associated page may be different if the processing record information is different. Further, the target object associated page is different if the processing ways included in the processing record information are different.

Exemplarily, if the processing record information is favoriting information of the target object, the target object associated page is a favoriting page. Optionally, the favoriting page includes summary information of all objects favorited by the user, or the favoriting page only includes summary information of the target object, or the favoriting page includes details information of the target object.

If the processing record information is carting information of the target object, the target object associated page is a shopping cart page. Optionally, the shopping cart page includes summary information of all objects carted by the user, or the shopping cart page only includes summary information of the target object, or the shopping cart page includes details information of the target object.

If the processing record information is the order placement information of the target object, the target object associated page is a presentation page of a waiting-for-receiving order. Optionally, the presentation page of the waiting-for-receiving order includes summary information and logistics information of all waiting-for-receiving orders owned by the user, or the presentation page of the waiting-for-receiving order only includes summary information and logistics information of the waiting-for-receiving order corresponding to the target object, or the presentation page of the waiting-for-receiving order only includes details and logistics information of the waiting-for-receiving order corresponding to the target object. Here, the logistics information can be regarded as the state information of the target object.

If the submitting order and pending payment processing is performed on the target object, the target object associated page is a presentation page of a pending payment order. Optionally, the presentation page of the pending payment order includes summary information of all waiting-for-receiving orders of the user and "order pending payment" state prompt information; or, the presentation page of the pending payment order only includes summary information of the pending payment order corresponding to the target object and the "order pending payment" state prompt information; or, the presentation page of the pending payment order only includes details information of the pending payment order corresponding to the target object and the "order pending payment" state prompt information. The "order pending payment" state prompt information can be regarded as the state information of the target object.

The summary information of the object can be a collection composed of partial attribute information of the object. The summary information of the object is used for briefly presenting an overview of the object to the user in a form of texts and/or images. If the summary information of the object is included in the target object associated page, the user can enter a object details page corresponding to the selected object by selecting the summary information of the object. The object details page is used for presenting all attribute information of the corresponding object in detail. For the same object, the amount of attribute information presented in the object details page is greater than that presented in the summary information. In the e-commerce scenario, the summary information of the object can be understood as a commodity card of a commodity.

Similarly, the order includes a variety of attributes. An attribute of the order can be, for example, a characteristic possessed by the creation of the order, etc. Exemplarily, the attribute of the order includes logistics information, a transaction number, a creation time, a transaction snapshot, commodity purchased by the order, and a shipping address, etc. of the order.

The summary information of the order is used for briefly presenting the overview of the order to the user in the form of texts and/or images. If the target object associated page includes the summary information of the order, the user can select the summary information of the order and enter the order details page corresponding to the selected order. The order details page is used for presenting all attribute information of the corresponding order in detail. For the same order, the amount of attribute information presented in the order details page is greater than the amount of attribute information presented in the summary information.

Further, optionally, the target object associated page may also be a commodity details page of the target object.

The present disclosure does not limit what kind of page the target page specifically refers to. For example, the target page can be a page that guides the user to view and process the object (here, the object can be a target object or other objects except for the target object). For example, the target page can be an information flow page or a mall homepage.

Here, the information flow page can be a page used in the application client to present an information flow in an information flow play sequence.

The information flow play sequence is a data form that continuously provides content to the user. The information flow play sequence includes a set of information/content. The set of information/content includes multiple pieces of information/content, which are arranged in a certain order to form an information flow play sequence.

The information flow refers to each information/content in the information flow play sequence. The information flow play sequence is a collection composed of multiple information streams. For example, if the information flow play sequence is a group of videos, each video therein is an information stream.

In some embodiments, the types of different information streams in the same information stream play sequence can be the same or different. The types of information streams can include but are not limited to livestreaming preview videos, livestreaming video, short videos, and graphics and text information. Here, the livestreaming preview videos can be videos used for diverting traffic to livestream rooms. The livestreaming video can be videos that reflect the content that are being livestreamed in the livestream rooms. The short videos can be short film videos. The graphics and text information can recommend some content to the user, such as recommending applications or page mini games.

The mall homepage, for example, can be a default or first presented page after entering the mall. The functions of the mall homepage include at least one of the following: guiding the user with clear commodity purchase needs to directly search for specific commodities; guiding the user with purchase needs for a certain type of commodities to hazily search for that type of commodities; attracting customers without shopping needs to browse and increase purchasing interest.

S120, presenting operation guidance information in the target page, if processing record information of a target object by a user satisfies a preset triggering condition, the operation guidance information being operation method prompt information for prompting the completion of a target process; the target process being a page presentation process from the target page to a target object associated page corresponding to the processing record information; the target object associated page being used for presenting information associated with the target object.

The target process can be a process in which the application transitions from presenting the state of the target page to presenting the state of the target object associated page. The state in which the application presents the target page is an initial state where the target process begins, and the state in which the application presents the target object associated page is a final state where the target process ends.

In one embodiment, after the target process starts, it is necessary to sequentially present each page in the page presentation sequence according to a preset page presentation sequence (usually set by research and development persons) until the target object associated page is reached. Optionally, the page presentation sequence includes a target page, an intermediate page, and a target object associated page. The present disclosure does not limit the number of intermediate pages in the page presentation sequence. In practice, the number of the intermediate pages can be 0 or a positive integer.

Based on this, in one embodiment, in the target process, only one time of page presentation can be performed, that is, the middle page does not need to be presented before presenting the target object associated page (because in this scenario, the page presentation sequence does not include the middle page). Exemplarily, when completing the target process, the target object associated page can be presented directly on the target page; or the target page can be directly switched to the target object associated page.

In another embodiment, in the target process, two or more times of page presentations can be performed, that is, the middle page needs to be presented before presenting the target object associated page (because in this scenario, the page presentation sequence includes the middle page). Exemplarily, if only one middle page is included, when completing the target process, the middle page is first presented in the target page, and then the target object associated page is presented in the middle page. Alternatively, when completing the target process, the target page is first switched to the middle page, and then the middle page is switched to the target object associated page.

In the foregoing, expressions such as "presenting page B in page A" can be used for presenting both page A and page B. In position, page A and page B can have a laminating relationship. For example, page A can be used as the background to present page B through a floating window, or page B can be used as the background to present page A through a floating window.

In the foregoing, expressions such as "switching page A to page B" can be closing page A and presenting page B.

The operation guidance information, for example, can be prompting information for prompting the user to perform selection operations (such as click or slide operations) on which options, positions, areas, or controls in the target page to complete the target process. The operation guidance information can be regarded as a tutorial to assist the user in learning how to find the target object associated page from the target page.

Optionally, the operation guidance information includes at least one of an image of the target object, text description information, and a mark icon. Optionally, if the target object is a commodity, the image of the target object can be a commodity main image.

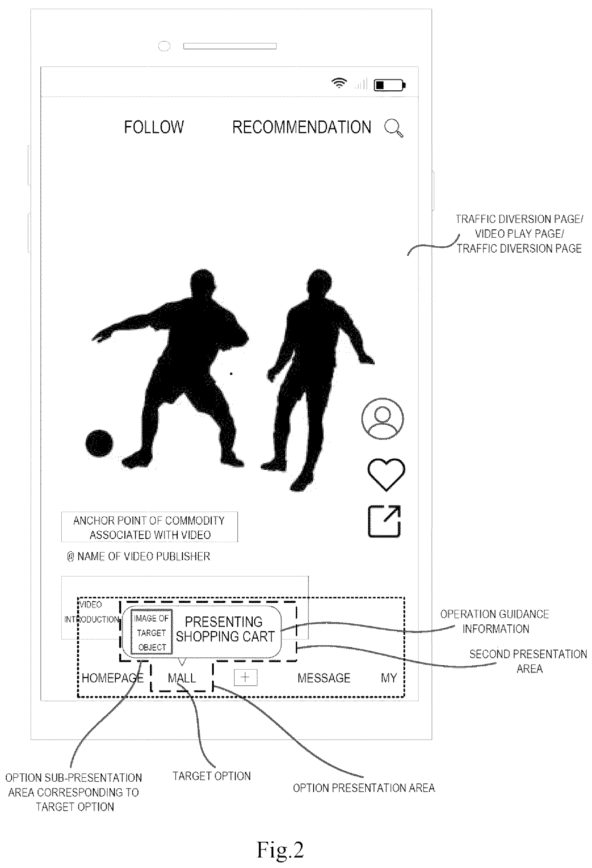

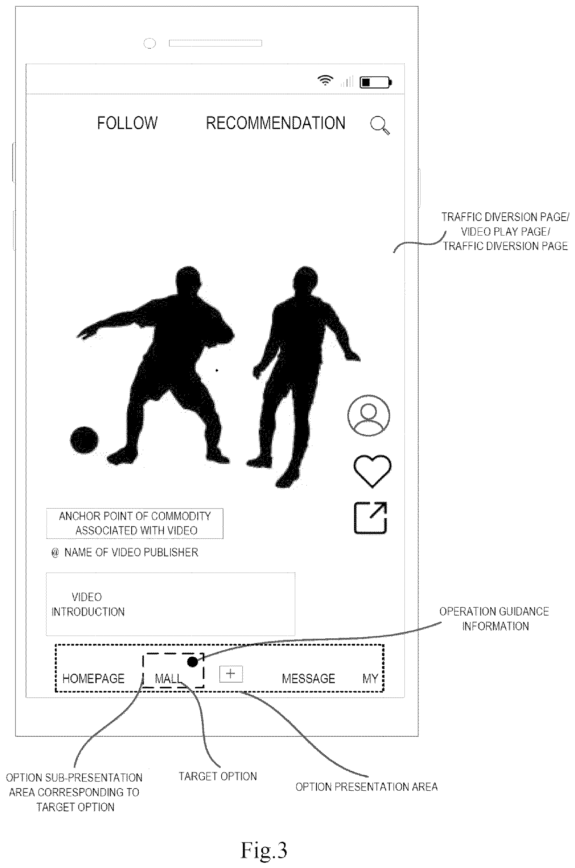

Figures 2 and 3 are schematic diagrams of two target pages provided in an embodiment of the present disclosure. If in the target process, after presenting the information flow page (i.e., the target page), the mall homepage is presented first, and then the shopping cart page (i.e., the target object associated page) is presented, see Figures 2 and 3. The target page includes operation guidance information and multiple options. Here, the "MALL" option is an entry into the mall homepage (i.e., the middle interface after the target page in the target process). Therefore, in this scenario, the "MALL" option is the target option.

In Figure 2, the operation guidance information includes the image of the target object and the text description information. The content of the text description information is "PRESENTING SHOPPING CART", and the operation guidance information points to the "MALL" option. Based on the operation guidance information, the user can understand that operation on the "MALL" option (i.e. target option) is one of the operations to complete the target process. In other words, in order to view the shopping cart page, the selection operation needs to be performed on the "MALL" option.

In Figure 3, the operation guidance information does not include the image of the target object and text description information, only includes the mark icon. The mark icon is circular and located near the "MALL" option (in the upper right corner of the "MALL" option in Figure 3). Based on this operation guidance information, the user can also understand that operation on the "MALL" option (i.e. target option) is one of the operations to complete the target process. In other words, in order to view the shopping cart page, the selection operation needs to be performed on the "MALL" option.

Further, a presentation style of the operation guidance information includes a first presentation style and a second presentation style; the operation guidance information in the first presentation style includes an image of the target object and text description information; the operation guidance information in the second presentation style includes a mark icon. S120 includes: if the processing record information of the target object by the user satisfies the preset triggering condition, presenting the operation guidance information in the first presentation style; if a presentation duration of the operation guidance information in the first presentation style reaches a presentation duration threshold and no triggering operation on the operation guidance information by the user is detected within a time period in which the operation guidance information is presented in the first presentation style, presenting the operation guidance information in the second presentation style.

The presentation duration threshold is preset to measure whether to change the presentation style of the operation guidance information. The present disclosure does not limit the specific value of the presentation duration threshold. For example, the presentation duration threshold is 3s or 5s, etc. Exemplarily, the operation guidance information is first presented in the style of Figure 2. If a presentation duration of the operation guidance information in the style of Figure 2 reaches the presentation duration threshold and no triggering operation on the operation guidance information by the user is detected within the time period in which the operation guidance information is presented in the style of Figure 2, the operation guidance information is presented in the style of Figure 3. Due to the large amount of information in the operation guidance information of the first style compared to the operation guidance information of the second style, the required presentation area is large, and the target page will be blocked in a large range. This setting can minimize disturbance to the user.

Further, if at least two processing recording information satisfies the preset triggering condition, the operation guidance information in the first presentation style includes an image of the target object associated with all the processing record information.

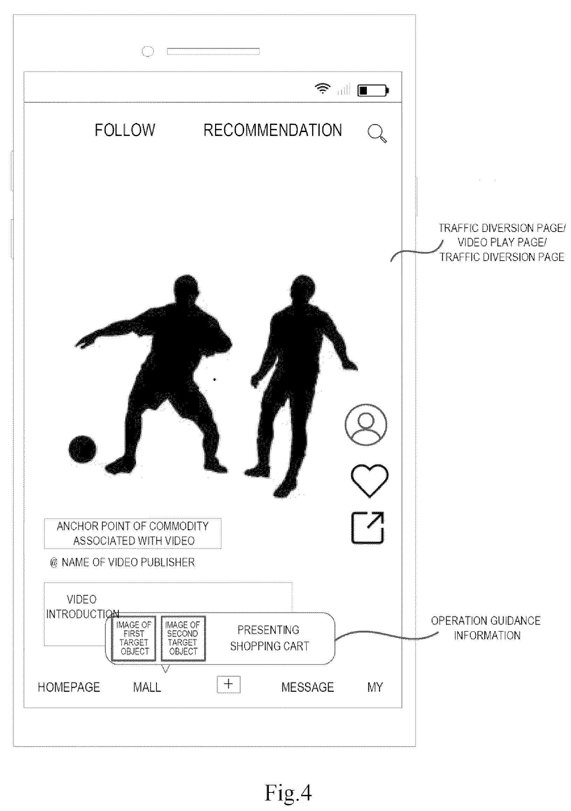

Figure 4 is a schematic diagram of another target page provided in an embodiment of the present disclosure. Assuming that there are two pieces of processing record information satisfying the preset triggering condition, being a first processing record information and a second processing record information, respectively. The first processing record information describes carting processing of a first target object, and the second processing record information describes carting processing of a second target object. Referring to Figure 4, the operation guidance information in the first presentation style is presented in the target page. The operation guidance information in the first presentation style includes the image of the first target, the image of the second target object, and the text description information.

The present disclosure does not limit the presentation position of the operation guidance information in the target page. Exemplarily, the target page comprises an option presentation area; the option presentation area is used for presenting at least one option, wherein the at least one option comprises a target option, the target option is an entry into the target object associated page or an entry into a page superior to the target object associated page; the option presentation area comprises at least one sub-presentation area each corresponding to one option, a presentation position of the operation guidance information in the target page is located in a sub-presentation area corresponding to the target option.

Here, if at least two options are presented in the option presentation area, optionally, different options as entry into different pages.

If the page presentation sequence includes a target page, intermediate pages, and a target object associated page. All intermediate pages can be used as pages superior to the target object associated page.

According to the page presentation sequence completing the target process, a next page after the currently presented page is defined as a successive page of the current page. A page superior to the target object associated page can be the successive page of the currently presented page. Exemplarily, if the page presentation sequence completing a target process can be represented as a video playing page → a mall homepage → a favoriting page. The mall homepage is the successive page of the video playing page, and the favoriting page is the successive page of the mall homepage. Assuming that the currently presented page is the target page, the target option can be, for example, an entry into the successive page of the target page.

Exemplarily, continuing to refer to Figures 2 and 3, assuming that the page presentation sequence of a target process is a traffic diversion page (i.e., a target page, in a practical scenario, such as a video playing page) → a mall homepage → a favoriting page. The bottom of the traffic diversion page is provided with an option presentation area. This option presentation area is used for presenting the "HOMEPAGE" option, "MALL" option, "+" option, "MESSAGE" option, and "MY" option. The "MALL" option is the target option. The presentation position of the operation guidance information is located in the sub-presentation area corresponding to the target option. The user can quickly find the target option through the presentation position of the operation guidance information in the target page.

Due to the specific processing ways (such as favoriting, carting, order placement, submitting order and pending payment, etc.) of the target object by the user being different, target object associated pages corresponding to different processing ways are different, and the operation guidance information associated with the processing record information are different. Optionally, for different processing ways, the presentation position of the operation guidance information and/or content (such as the image of the target object and the text description information copywriting) included in the operation guidance information are different.

The preset triggering condition, for example, may be set for processing records, for determining whether to present a measuring standard of operation guidance information in the target page. The present disclosure does not limit the specific content of the preset triggering condition.

**In** one embodiment, the preset triggering condition includes a time interval between a time instant of generation of the processing record information and a current time instant being less than or equal to a set time threshold. Exemplarily, the set time threshold is 5 days or 30 days. The purpose of such setting is to filter out processing record information that is generated earlier with respect to the current time instant.

In another embodiment, the preset triggering condition includes: the processing record information is an operation record for reflecting a preset processing of the target object. The operation record of the preset processing can be a pre-specified processing, for example. Exemplarily, the pre-specified preset processing includes favoriting, carting, order placement, submitting order and pending payment, etc. If the processing record of the target object by the user is a carting record, it belongs to the operation record reflecting the preset processing of the target object, and it is determined that the processing record information of the target object by the user satisfies the preset triggering condition. If the processing record of another target object by the user is a record of deleting from the shopping cart, it does not belong to the operation record reflecting the preset processing of the target object, and it is determined that the processing record information of the target object by the user does not satisfy the preset triggering condition.

In yet another embodiment, optionally, the preset triggering condition comprises: the processing record information is an operation record for reflecting a preset processing of the target object; and a time interval between a time instant of generation of the processing record information and a current time instant is less than or equal to a set time threshold.

Further, the page presentation sequence completing the target process is defined as a first page presentation sequence, which reflects an order in which each page is presented when the target process is completed. The processing record information includes a second page presentation sequence, which reflects an order in which each page is presented during the processing of the target object. The preset triggering condition includes: the similarity between the first page presentation sequence and the second page presentation sequence is less than or equal to a set similarity threshold.

The similarity threshold can be a parameter that measures whether the first page presentation sequence and the second page presentation sequence are similar. If the similarity between the first page presentation sequence and the second page presentation sequence is less than or equal to the set similarity threshold, it is considered that the first page presentation sequence and the second page presentation sequence are not similar, which means that although the user has learned to control the terminal to perform page presentation along the second page presentation sequence to process the target object, they may not know that the associated information (such as the attribute information and/or the state information) of the target object can be viewed along the first page presentation sequence. The present disclosure does not limit the specific value of the similarity threshold. By setting the preset triggering condition that the similarity between the first page presentation sequence and the second page presentation sequence is less than or equal to the set similarity threshold, the user can be assisted in learning to use the application from multiple perspectives.

Exemplarily, carting the target object by the user is used as an example to illustrate. Assuming that the first page presentation sequence is an information flow page → a mall homepage → a shopping cart page.

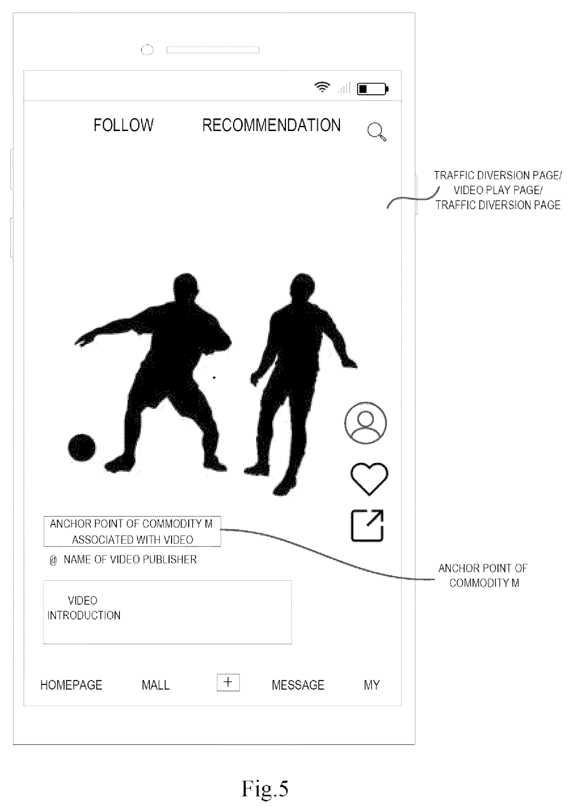

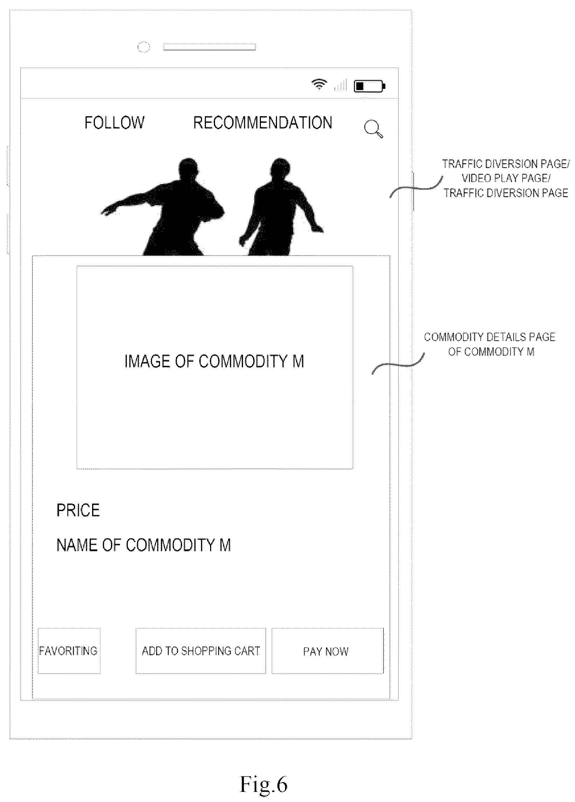

Figures 5-6 are schematic diagrams of a client display interface of an application in a process of carting a target object provided by the present disclosure. Referring to Figure 5, assuming that a user watches a short video in an information flow page (i.e., a target page), the short video is associated with an anchor point of commodity M. The anchor point of commodity M can be a quick entry for quickly taking the user to the commodity details page of commodity M. The user clicks on the anchor point of commodity M in Figure 5, see Figure 6, to reach the commodity details page of commodity M. Then, the user triggers the "ADD TO SHOPPING CART" option in the commodity details page of commodity M to perform carting processing on commodity M. In this scenario, the second page presentation sequence can be represented as the information flow page → the commodity details page of commodity M. In this scenario, only initial pages (i.e., the information flow page) of the first page presentation sequence and the second page presentation sequence are identical, and remaining pages presented are different. It is determined that the similarity between the first page presentation sequence and the second page presentation sequence is less than the set similarity threshold the processing record information satisfies the preset triggering condition, and the operation guidance information is presented on the target page.

In practice, there may be another method of carting the target object. For example, the user watches a short video in the information flow page (i.e. the target page), and then clicks the "MALL" option on the information flow page to present the mall homepage. In the mall homepage, the user enters the commodity details page of commodity M by searching for commodity M. In the commodity details page of commodity M, carting processing is performed on commodity M by triggering the option of "ADD TO SHOPPING CART". In this scenario, the second page presentation sequence can be represented as the information flow page → the mall homepage → the commodity details page of commodity M. In this scenario, the initial pages (i.e., information flow page) and the mall homepages in the first page presentation sequence and the second page presentation sequence are identical. It is determined that the similarity between the first page presentation sequence and the second page presentation sequence is greater than the set similarity threshold, the processing record information does not satisfy the preset triggering condition, and the operation guidance information is not presented in the target page.

In the above technical solution, if processing record information of a target object by a user satisfies a preset triggering condition, operation guidance information is presented in the target page, the operation guidance information is operation method prompt information for prompting the completion of a target process; the target process is a page presentation process from the target page to a target object associated page corresponding to the processing record information; the target object associated page is used for presenting information associated with the target object. It can associate a teaching process of guiding the user to use the application with its historical behavior, improving the user experience.

On the basis of the above technical solutions, optionally, the target page is used for playing the target video; the target video can be a short video, a livestreaming preview video, or a livestreaming video.

Optionally, the target video is used for recommending an object to the user. The object recommended by the target video to the user can include only the target object, or it can include both the target object and non-target objects (non-target objects refer to objects that the user has not processed), and it can also include only non-target objects.

Further, the target video can set to be associated with the target object. Exemplarily, in one scenario, a target object is commodity M, and the target video is used for recommending commodity M to the user. In this case, the target video is considered to be associated with the target object. In another scenario, a target object is commodity M, and the target video is livestreaming video, which is used for recommending commodity M and other commodities (such as commodity N) besides commodity M to the user. In this case, the target video is also considered to be associated with the target object.

On the basis of the above technical solutions, in one embodiment, optionally, the method further comprises: in response to a selection operation on the operation guidance information, presenting the target object associated page; or in response to a selection operation on the target option, presenting a successive page. The successive page being a page in a page presentation sequence completing the target process; if the successive page is not the target object associated page, using the successive page as the target page, and continuing to perform the step of presenting operation guidance information in the target page if processing record information of a target object by a user satisfies a preset triggering condition, until the successive page is the target object associated page.

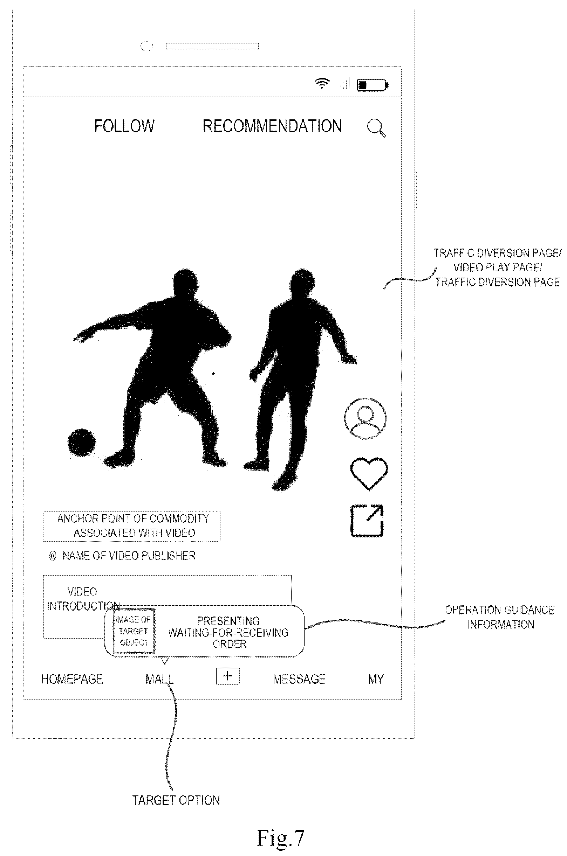

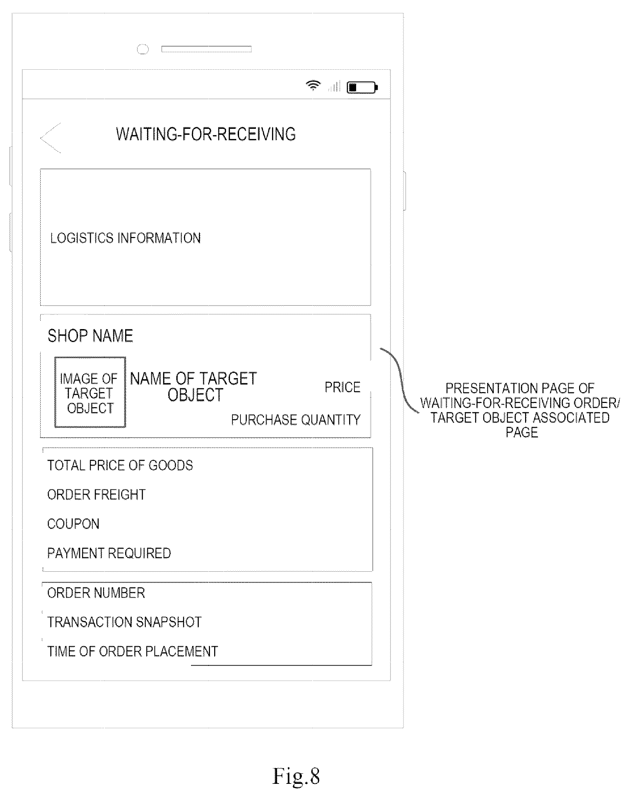

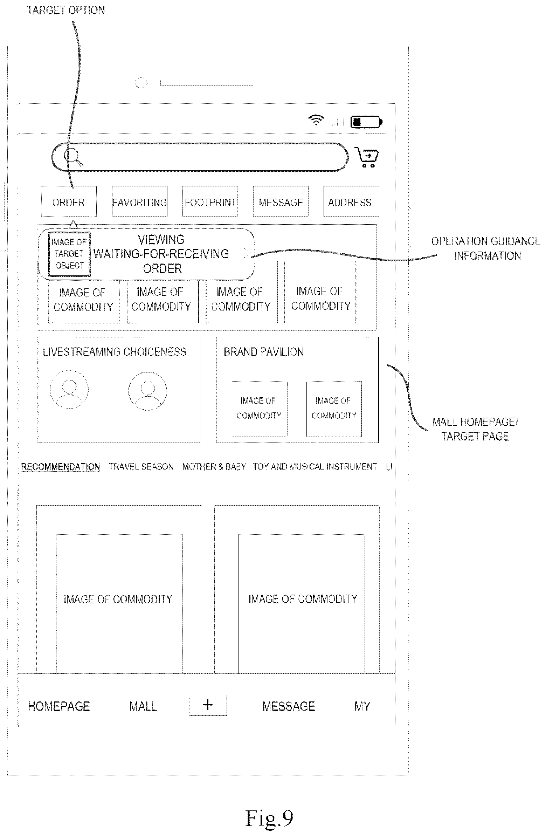

Exemplarily, Figures 7-9 are schematic diagrams of a display interface of an application in an order placement processing scenario provided in an embodiment of the present disclosure. Assuming that the page presentation sequence completing the target process can be represented as a video playing page (i.e. a target page) → a mall homepage → a presentation page of waiting-for-receiving order (i.e. a target object associated page). Continuing to refer to Figure 7, the target option "MALL" and the operation guidance information are presented in the video playing page. If the user selects the operation guidance information in Figure 7, referring to Figure 8, the presentation page of the waiting-for-receiving order is presented. If the user selects the "MALL" option in Figure 7, referring to Figure 9, the mall homepage is presented. Continuing to refer to Figure 9, since the mall homepage is not a presentation page of waiting-for-receiving order, the mall homepage is regarded as a target page and the operation guidance information is presented in the mall homepage. If the user selects the operation guidance information in Figure 9, referring to Figure 8, the presentation page of the waiting-for-receiving order is presented. That is, the selection operation on the operation guidance information can be regarded as a way to quickly present the target object associated page.

The presentation style of the target object associated page includes a third presentation style and a fourth presentation style. In response to the selection operation on the operation guidance information, the target object associated page is presented in the third presentation style; in response to the selection operation on the target option, the successive page is presented. If the successive page is the target object associated page, the presentation style of the target object associated page is the fourth presentation style.

Exemplarily, the presentation page of the waiting-for-receiving order in the third presentation style only includes details information and logistics information of the waiting-for-receiving order corresponding to the target object. The presentation page of the waiting-for-receiving order in the fourth presentation style includes summary information and logistics information of all waiting-for-receiving orders. If the user selects the operation guidance information, the target object associated page is presented in the third presentation style; if the user selects the target option, the successive page is presented. If the successive page is a target object associated page, the presentation style of the target object associated page is the fourth presentation style.

In various embodiments of the present disclosure, the collection and use of object processing information are authorized by the user and comply with relevant regulations. In addition, in the collection and use of object processing information, personal information of the user will not be collected or processed in a way that does not reveal the identity of the user.

On the basis of the above technical solutions, in one embodiment, optionally, the method further comprises: in response to a selection operation on the operation guidance information, or in response to a selection operation on the target option, presenting the successive page. The successive page being a page in a page presentation sequence completing the target process; if the successive page is not the target object associated page, using the successive page as the target page, and continuing to perform the step of presenting operation guidance information in the target page if processing record information of a target object by a user satisfies a preset triggering condition, until the successive page is the target object associated page.

Exemplarily, assuming that the page presentation sequence completing the target process can be represented as a video playing page (i.e. a target page) → a mall homepage → a presentation page of a waiting-for-receiving order (i.e. a target object associated page). Continuing to refer to Figure 7, the target option "MALL" and operation guidance information are presented in the video playing page. Regardless of whether the user selects the operation guidance information in Figure 7 or selects the "MALL" option in Figure 7, as shown in Figure 9, the mall homepage is presented. Continuing to refer to Figure 9, after presenting the mall homepage, since the mall homepage is not the presentation page of the waiting-for-receiving order, the mall homepage is regarded as the target page and the operation guidance information is presented in the mall homepage. If the user selects the operation guidance information in Figure 9, the presentation page of the waiting-for-receiving order is presented, see Figure 8. That is, for the selection operation on the operation guidance information and the selection operation on the target option, the response way is identical.

Further, if the target page is used for playing the target video; S120 comprises: if processing record information of a target object by a user satisfies a preset triggering condition and a play progress of the target video is greater than or equal to a set progress threshold, presenting operation guidance information in the target page.

The play progress of the target video can be a ratio of the played duration of the target video to the total duration. The set progress threshold can be a parameter that measures whether the operation guidance information is presented at the current time instant. Exemplarily, if the play progress of the target video is greater than or equal to the set progress threshold, it means that the target video is about to finish playing. The present disclosure does not limit the specific value of the set progress threshold. Exemplarily, the set progress threshold is 95% or 100%.

By setting if processing record information of a target object by a user satisfies a preset triggering condition and a play progress of the target video is greater than or equal to a set progress threshold, presenting operation guidance information in the target page, the initial time instant of presentation of the operation guidance information can be limited to minimize or avoid the operation guidance information obstruction target page, interfering with the user watching the target video.

On the basis of the above technical solutions, in one embodiment, optionally, if at least two pieces of processing record information satisfies the preset triggering condition, the method further comprising: determining the operation guidance information corresponding to each processing record information respectively. "Present the operation guidance information in the target page" in S130 includes: arranging each operation guidance information to form an operation guidance queue; the shorter a time interval between a time instant of generation of the processing record information and a current time instant being, the more forward the operation guidance information corresponding to the processing record information being arranged in the operation guidance queue; presenting, in the target page, operation guidance information in the first place in the operation guidance queue; or presenting, in the target page, each operation guidance information in the operation guidance queue in sequence according to an order of each operation guidance information arranged in the operation guidance queue.

For ease of understanding, the processing record information corresponding to the operation guidance information in the first place in the operation guidance queue is called target processing record information. The processing performed by the user on the target object involved in the target processing record information is the last processing performed by the user up to the current instant. This means that the user has a deep impression on the target object involved in the target processing record information. By presenting the operation guidance information in the first place in the operation guidance queue, it is beneficial to stimulate the interest of the user in learning to use the application, thereby improving the teaching efficiency of guiding the user to use the application.

"Presenting, in the target page, each operation guidance information in the operation guidance queue in sequence according to an order of each operation guidance information arranged in the operation guidance queue". In specific implementation, there can be multiple ways. For example, one way is to present each operation guidance information in the operation guidance queue sequentially according to the arrangement order of each operation guidance information in the operation guidance queue. When the operation guidance information at the end of the operation guidance queue is presented, the operation guidance information at the top is presented again.

Exemplarily, two pieces of operation guidance information are determined in total. In the target page, a first operation guidance information is presented first. When the first operation guidance information is presented for a specified duration (such as 5s or 10s), the presentation of the first operation guidance information is stopped and a second operation guidance information is presented. When the second operation guidance information is presented for a specified duration (such as 5s or 10s), the presentation of the second operation guidance information is stopped and the first operation guidance information is presented.

Exemplarily, in another embodiment, according to the arrangement order of each operation guidance information in the operation guidance queue, each operation guidance information in the operation guidance queue is sequentially presented; when the operation guidance information in the first place in the operation guidance queue is presented, the presentation of the operation guidance information is stopped.

Exemplarily, assuming that two pieces of operation guidance information are determined. In the target page, a first operation guidance information is presented first. When the first operation guidance information is presented for a specified duration (such as 5s or 10s), the presentation of the first operation guidance information is stopped and a second operation guidance information is presented. When the second operation guidance information is presented for a specified duration (such as 5s or 10s), the operation guidance information is no longer presented.

It should be noted that, in the technical solution of the embodiments of the present disclosure, the acquisition, storage and application of the user personal information involved, are in compliance with the provisions of relevant laws and regulations, and does not violate public order and good customs. In various embodiments of the present disclosure, the collection and use of object processing information are authorized by the user and comply with relevant regulations. In addition, in the collection and use of object processing information, personal information of the user will not be collected or processed in a way that does not reveal the identity of the user.

It should be noted that for the above-mentioned method embodiments, they are all described as a series of action combinations for simplicity. However, those skilled in the art should be aware that the present disclosure is not limited by the order of actions described, because according to the present disclosure, some steps can be performed in other sequences or simultaneously. Secondly, those skilled in the art should also be aware that the embodiments described in the specification are preferred embodiments, and the actions and modules involved are not necessarily essential for the present disclosure.

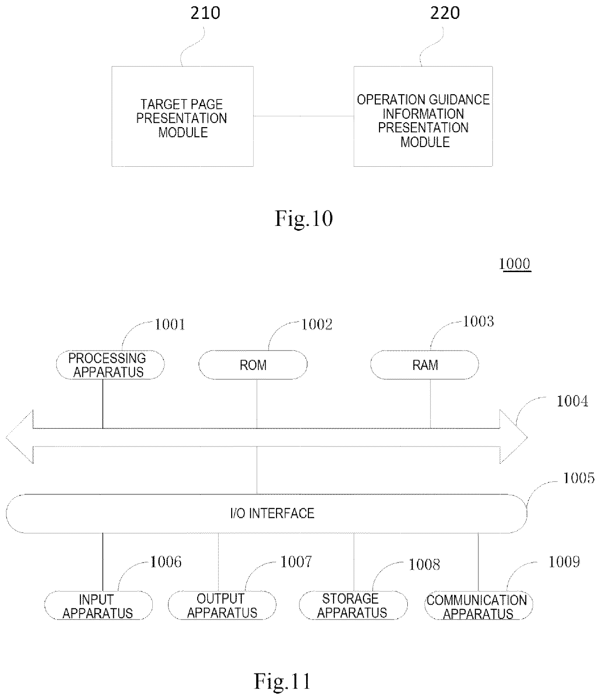

Figure 10 is a schematic structural diagram of an interaction apparatus in an embodiment of the present disclosure. The interaction apparatus provided in the embodiment of the present disclosure can be configured in a client. Referring to Figure 10, the interaction apparatus specifically includes:
a target page presentation module 210 for presenting the target page;
an operation guidance information presentation module 220 for presenting operation guidance information in the target page, if processing record information of a target object by a user satisfies a preset triggering condition, the operation guidance information being operation method prompt information for prompting the completion of a target process; the target process being a page presentation process from the target page to a target object associated page corresponding to the processing record information; the target object associated page being used for presenting information associated with the target object.

Further, the target page comprises an option presentation area; the option presentation area is used for presenting at least one option, wherein the at least one option comprises a target option, the target option is an entry into the target object associated page or an entry into a page superior to the target object associated page; the option presentation area comprises at least one sub-presentation area each corresponding to one option,
a presentation position of the operation guidance information in the target page is located in a sub-presentation area corresponding to the target option.

Further, the target page is used for playing a target video; the target video is associated with the target object;
the preset triggering condition comprises: the processing record information is an operation record for reflecting a preset processing of the target object; or
the preset triggering condition comprises: the processing record information is an operation record for reflecting a preset processing of the target object; and a time interval between a time instant of generation of the processing record information and a current time instant is less than or equal to a set time threshold;
the target object associated page comprises attribute information and/or state information of the target object.

Further, a presentation style of the operation guidance information comprises a first presentation style and a second presentation style;
the operation guidance information in the first presentation style comprises an image of the target object and text description information; the operation guidance information in the second presentation style comprises a mark icon; if at least two pieces of the processing record information satisfy the preset triggering condition, the operation guidance information in the first presentation style comprises images of the target object associated with all the processing record information;
the operation guidance information presentation module is configure to:
   if the processing record information of the target object by the user satisfies the preset triggering condition, presenting the operation guidance information in the first presentation style;
   if a presentation duration of the operation guidance information in the first presentation style reaches a presentation duration threshold and no triggering operation on the operation guidance information by the user is detected within a time period in which the operation guidance information is presented in the first presentation style, presenting the operation guidance information in the second presentation style.

Further, the apparatus further comprises a response module for:
in response to a selection operation on the operation guidance information, presenting the target object associated page; or
in response to a selection operation on the target option, presenting a successive page; the successive page being a page in a page presentation sequence completing the target process; if the successive page is not the target object associated page, using the successive page as the target page, and continuing to perform the step of presenting operation guidance information in the target page if processing record information of a target object by a user satisfies a preset triggering condition, until the successive page is the target object associated page.

Further, the apparatus further comprises a response module for:
in response to a selection operation on the operation guidance information, or in response to a selection operation on the target option, presenting the successive page; the successive page being a page in a page presentation sequence completing the target process; if the successive page is not the target object associated page, using the successive page as the target page, and continuing to perform the step of presenting operation guidance information in the target page if processing record information of a target object by a user satisfies a preset triggering condition, until the successive page is the target object associated page.

Further, the target page is used for playing a target video; the operation guidance information presentation module is used for:
if processing record information of a target object by a user satisfies a preset triggering condition and a play progress of the target video is greater than or equal to a set progress threshold, presenting operation guidance information in the target page.

The interaction apparatus provided in the embodiments of the present disclosure, may perform the steps in the interaction method executed by the client provided in the embodiments of the present disclosure, the execution steps and beneficial effects are not repeated here.

Figure 11 is a schematic structural diagram of an electronic device in the embodiments of the present disclosure. Referring specifically to Figure 11 in the following, which illustrates a schematic structural diagram suitable for implementing the electronic device 1000 in the embodiments of the present disclosure. The electronic device 1000 in the embodiments of the present disclosure may comprise, but does not limit, a mobile terminal, such as, a mobile phone, a notebook computer, a digital broadcasting receiver, a personal digital assistant (PDA), a PAD (tablet), a portable multimedia player (PMP), a vehicle-mounted terminal (e.g., in-vehicle navigation terminal), a wearable electronic device, and a fixed terminal, such as, a digital TV, a desktop computer, a smart home appliance, and the like. The electronic device illustrated in Figure 11 is only an example without any limitations on the functions and scope of use of the embodiments of the present disclosure.

As shown in Figure 11, the electronic device 1000 may comprise the processing apparatus (e.g., a central processor, a graphics and texts processor, etc.) 1001, which may perform various appropriate actions and process according to the program stored in the read-only memory (ROM) 1002 or the program loaded from the storage apparatus 1008 into the random access memory (RAM) 1003 to carry out the interaction method described in the embodiments of the present disclosure. In the RAM 1003, various programs and information required for the operation of the electronic device 1000 are also stored. The processing apparatus 1001, ROM 1002, and RAM 1003 are connected to each other via the bus 1004. The input/output (I/O) interface 1005 is also connected to the bus 1004.

Generally, the following apparatuses may be connected to the I/O interface 1005: the input apparatus 1006 including, for example, touch screen, touchpad, keyboard, mouse, camera, microphone, accelerometer, gyroscope, etc.; the output apparatus 1007 including, for example, liquid crystal display (LCD), speaker, vibrator, etc.; the storage apparatus 1008 including, for example, magnetic tape, hard drive, etc.; and the communication apparatus 1009. The communication apparatus 1009 may allow the electronic device 1000 to communicate wirelessly or wirelessly with other devices to exchange information. Although Figure 11 illustrates the electronic device 1000 with various apparatuses, it should be understood that it is not required to implement or possess all the illustrated apparatuses. More or fewer apparatuses may be optionally implemented or possessed.

Specifically, according to the embodiments of the present disclosure, the processes described above with reference to the flow charts may be implemented as a computer software program. For example, the embodiments of the present disclosure comprise a computer program product, which comprises a computer program carried on a non-transitory computer-readable medium. The computer program contains program code for executing the method shown in the flow chart for implementing the interaction method as described above. In such an embodiment, the computer program may be downloaded and installed from the network through the communication apparatus 1009, or installed from the storage apparatus 1008, or installed from the ROM 1002. When the computer program is executed by the processing apparatus 1001, the above functions defined in the method of the embodiments of the present disclosure are executed.

It should be noted that the computer-readable medium mentioned above in the present disclosure may be a computer-readable signal medium or a computer-readable storage medium, or any combination thereof. The computer-readable storage medium may be, for example, but not limited to, electrical, magnetic, optical, electromagnetic, infrared, or semiconductor systems, apparatuses or devices, or any combination thereof. More specific examples of computer-readable storage medium may comprise, but are not limited to: electrical connection with one or more wires, portable computer disk, hard drive, random access memory (RAM), read-only memory (ROM), erasable programmable read-only memory (EPROM or flash memory), optical fiber, portable compact disk read-only memory (CD-ROM), optical storage device, magnetic storage device or any suitable combination of the above. In the present disclosure, the computer-readable storage medium may be any tangible medium that contains or stores a program, which may be used by or in combination with an instruction execution system, apparatus, or device. In the present disclosure, the computer-readable signal medium may comprise information signals propagated in baseband or as part of the carrier, which carry computer-readable program code. Such propagated information signals may take a variety of forms, including but not limited to, electromagnetic signals, optical signals, or any suitable combination of the above. The computer-readable signal medium may also be any computer-readable medium other than a computer-readable storage medium, which can transmit, propagate, or transport a program for use by or in combination with an instruction execution system, apparatus, or device. The program code contained on the computer readable medium may be transmitted using any suitable medium, including but not limited to, wire, optical cable, radio frequency (RF), etc., or any suitable combination of the above.

In some implementations, clients and servers may communicate using any known or future developed network protocol, such as, HyperText Transfer Protocol (HTTP), and may interconnect with digital information communication (e.g., communication network) in any form or medium. Examples of communication network comprise local area network (LAN), wide area network (WAN), Internet, and end-to-end network (e.g., ad hoc end-to-end network), as well as any known or future developed network.

The above-mentioned computer readable medium may be contained in the above-mentioned electronic device; optionally, it may exist separately without being assembled into the electronic device.

The above-mentioned computer readable medium carries one or more programs, the one or more programs, when executed by the electronic device, cause the electronic device to:
presenting a target page;
presenting operation guidance information in the target page, if processing record information of a target object by a user satisfies a preset triggering condition, the operation guidance information being operation method prompt information for prompting the completion of a target process; the target process being a page presentation process from the target page to a target object associated page corresponding to the processing record information; the target object associated page being used for presenting information associated with the target object.

Optionally, when the one or more programs are executed by the electronic device, the electronic device may further perform other steps described in the above embodiments.

Computer program code for executing the operations of the present disclosure may be written in one or more programming languages or a combination thereof, including but not limited to, object-oriented programming languages, such as, Java, Smalltalk, C++, and conventional procedural programming languages, such as, C or similar programming languages. Program code may be completely executed on the user's computer, partially executed on the user's computer, executed as a standalone software package, partially executed on the user's computer and partially executed on a remote computer, or completely executed on a remote computer or server. In the case involving the remote computer, the remote computer may be connected to the user's computer through any kind of network, including the local area network (LAN) or the wide area network (WAN), or may be connected to an external computer (e.g., using an Internet service provider to connect through the Internet).

The flow chart and block diagram in the accompanying drawings illustrate the architectures, functions, and operations of possible implementations of systems, methods, and computer program products according to various embodiments of the present disclosure. In this regard, each block in the flow chart or block diagram may represent a module, a program segment, or a part of code that contains one or more executable instructions for implementing specified logical functions. It should also be noted that, in some alternative implementations, the functions indicated in the blocks may occur in a different order than that indicated in the accompanying drawings. For example, two blocks shown in succession may actually be executed substantially in parallel, and sometimes they may also be executed in reverse order, which depends on the functions involved. It should also be noted that each of the blocks in the block diagram and/or flow chart, as well as the combination of blocks in the block diagram and/or flow chart, may be implemented with a specialized hardware-based system that performs specified functions or operations, or may be implemented with a combination of specialized hardware and computer instructions.

The units described in the embodiments of the present disclosure may be implemented in software or hardware. In some cases, the units are not limited by the names of the units.

The functions described above herein may be executed, at least in part, by one or more hardware logic components. For example, and without limitation, exemplary types of hardware logic components that may be used comprise: Field Programmable Gate Array (FPGA), Application Specific Integrated Circuit (ASIC), Application Specific Standard Product (ASSP), System On Chip (SOC), Complex Programmable Logic Device (CPLD), and so on.

In the context of the present disclosure, a machine readable medium may be a tangible medium that may contain or store a program for use by or in combination with the instruction execution system, apparatus, or device. The machine readable medium may be a machine readable signal medium or a machine readable storage medium. The machine readable medium may comprise, but are not limited to, electronic, magnetic, optical, electromagnetic, infrared, or semiconductor system, apparatus, or device, or any suitable combination of the above. More specific examples of the machine readable storage medium may comprise electrical connection based on one or more wires, portable computer disk, hard drive, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the above.

According to one or more embodiments of the present disclosure, there is provided an electronic device, comprising:
one or more processors;
a memory for storing one or more programs;
the one or more programs, when executed by the one or more processors, cause the one or more processors to carry out any of the interaction methods as provided by the present disclosure.

According to one or more embodiments of the present disclosure, there is provided a computer-readable storage medium having a computer program stored thereon, wherein the program, when executed by a processor, carries out any of the interaction methods as provided by the present disclosure.

The embodiments of the present disclosure also provide a computer program product, which comprises a computer program or instruction. The computer program or instruction, when executed by a processor, causes the interaction method described above to be carried out.

It should be noted that herein, relational terms, such as, "first" and "second", are only used to distinguish one entity or operation from another entity or operation, and do not necessarily require or imply there is any such actual relation or order between these entities or operations. Moreover, the terms "comprising", "containing", or any other variant thereof are intended to encompass non exclusive inclusion, such that a process, method, item, or device that comprises a series of elements comprises not only those elements, but also other elements that are not explicitly listed, or elements inherent to the process, method, item, or device. Without further limitations, an element defined by the expression "comprising one..." does not exclude the presence of additional identical elements in the process, method, item, or device that comprises the said elements.

The above descriptions are only the specific implementations of the present disclosure, which enable those skilled in the art to understand or implement the present disclosure. Various modifications to these embodiments will be apparent to those skilled in the art, and the general principles defined herein may be implemented in other embodiments without departing from the spirit or scope of the present disclosure. Therefore, the present disclosure does not limit the embodiments described herein, but rather to the widest scope consistent with the principles and novel features disclosed herein.

## Claims

1. An interaction method, comprising:
presenting a target page; and
presenting operation guidance information in the target page, if processing record information of a target object by a user satisfies a preset triggering condition, the operation guidance information being operation method prompt information for prompting the completion of a target process; the target process being a page presentation process from the target page to a target object associated page corresponding to the processing record information; the target object associated page being used for presenting information associated with the target object.

2. The interaction method according to claim 1, wherein the target page comprises an option presentation area; the option presentation area is used for presenting at least one option, wherein the at least one option comprises a target option, the target option is an entry into the target object associated page or an entry into a page superior to the target object associated page; the option presentation area comprises at least one sub-presentation area each corresponding to one option,
a presentation position of the operation guidance information in the target page is located in a sub-presentation area corresponding to the target option.

3. The interaction method according to claim 1, wherein the target page is used for playing a target video; the target video is associated with the target object;
the preset triggering condition comprises: the processing record information is an operation record for reflecting a preset processing of the target object; or
the preset triggering condition comprises: the processing record information is an operation record for reflecting a preset processing of the target object; and a time interval between a time instant of generation of the processing record information and a current time instant is less than or equal to a set time threshold;
the target object associated page comprises attribute information and/or state information of the target object.

4. The interaction method according to claim 1, wherein a presentation style of the operation guidance information comprises a first presentation style and a second presentation style;
the operation guidance information in the first presentation style comprises an image of the target object and text description information; the operation guidance information in the second presentation style comprises a mark icon; if at least two pieces of the processing record information satisfy the preset triggering condition, the operation guidance information in the first presentation style comprises images of the target object associated with all the processing record information;
the presenting operation guidance information in the target page if processing record information of a target object by a user satisfies a preset triggering condition, comprises:
if the processing record information of the target object by the user satisfies the preset triggering condition, presenting the operation guidance information in the first presentation style;
if a presentation duration of the operation guidance information in the first presentation style reaches a presentation duration threshold and no triggering operation on the operation guidance information by the user is detected within a time period in which the operation guidance information is presented in the first presentation style, presenting the operation guidance information in the second presentation style.

5. The interaction method according to claim 2, wherein further comprising:
in response to a selection operation on the operation guidance information, presenting the target object associated page; or
in response to a selection operation on the target option, presenting a successive page; the successive page being a page in a page presentation sequence completing the target process; if the successive page is not the target object associated page, using the successive page as the target page, and continuing to perform the step of presenting operation guidance information in the target page if processing record information of a target object by a user satisfies a preset triggering condition, until the successive page is the target object associated page.

6. The interaction method according to claim 2, wherein further comprising:
in response to a selection operation on the operation guidance information, or in response to a selection operation on the target option, presenting the successive page; the successive page being a page in a page presentation sequence completing the target process; if the successive page is not the target object associated page, using the successive page as the target page, and continuing to perform the step of presenting operation guidance information in the target page if processing record information of a target object by a user satisfies a preset triggering condition, until the successive page is the target object associated page.

7. The interaction method according to claim 1, wherein the target page is used for playing a target video; the presenting operation guidance information in the target page if processing record information of a target object by a user satisfies a preset triggering condition comprises:
if processing record information of a target object by a user satisfies a preset triggering condition and a play progress of the target video is greater than or equal to a set progress threshold, presenting operation guidance information in the target page.

8. The interaction method according to claim 1, wherein if at least two pieces of the processing record information satisfy a preset triggering condition, the method further comprises:
determining the operation guidance information corresponding to each processing record information respectively;
the presenting operation guidance information in the target page comprises:
arranging each operation guidance information to form an operation guidance queue; the shorter a time interval between a time instant of generation of the processing record information and a current time instant being, the more forward the operation guidance information corresponding to the processing record information being arranged in the operation guidance queue;
presenting, in the target page, operation guidance information in the first place in the operation guidance queue; or presenting, in the target page, each operation guidance information in the operation guidance queue in sequence according to an order of each operation guidance information arranged in the operation guidance queue.

9. An interaction apparatus, comprising:
a target page presentation module configured to present a target page;
an operation guidance information presentation module configured to present operation guidance information in the target page, if processing record information of a target object by a user satisfies a preset triggering condition, the operation guidance information being operation method prompt information for prompting the completion of a target process; the target process being a page presentation process from the target page to a target object associated page corresponding to the processing record information; the target object associated page being used for presenting information associated with the target object.

10. An electronic device, comprising:
one or more processors;
a storage apparatus for storing one or more programs;
the one or more programs, when executed by the one or more processors, cause the one or more processors to carry out the method of any of claims 1 to 8.

11. A computer-readable storage medium having a computer program stored thereon, the program, when executed by a processor, carries out the method of any of claims 1 to 8.
